# EUROPÄISCHE PATENTANMELDUNG

(11) **EP 4 280 568 A1**
(43) Veröffentlichungstag der Anmeldung: **22.11.2023**
(21) Anmeldenummer: 23169903.4
(22) Anmeldetag: 25.04.2023
(51) Int. Cl.: H04L 67/06, H04L 67/12, H04W 4/44

(54) **STEUERUNG EINER ÜBERTRAGUNG VON DATEIEN**

(30) Priorität: 18.05.2022 DE 102022204927
(71) Anmelder: Siemens Mobility GmbH, 81739 München (DE)
(72) Erfinder: Porsch, Roland, 95469 Speichersdorf (DE)
(74) Vertreter: Siemens Patent Attorneys

(57) **Zusammenfassung**

Die Erfindung betrifft ein Verfahren (100) zur Steuerung einer Übertragung von Dateien (D). Zur Steuerung der Übertragung wird eine Art eines Inhalts von zu übertragenden Dateien (D) ermittelt (102). Des Weiteren wird den zu übertragenden Dateien (D) auf Basis der Art deren Inhalts wenigstens ein Attribut zugeordnet (104, 106, 108, 110). Daraufhin werden die zu übertragenden Dateien (D) in Abhängigkeit von dem wenigstens einen Attribut übertragen (120).

## Beschreibung

Die Erfindung betrifft ein Verfahren zur Steuerung einer Übertragung von Dateien, ein System zur Durchführung des Verfahrens, ein Computerprogramm sowie ein computerlesbares Medium.

Während eines Betriebs von modernen Maschinen oder Fahrzeugen wird durch diese eine Vielzahl an verschieden gearteten Dateien erzeugt. Solche Dateien betreffen unter anderem Betriebszustände, interne Prozesse, Wartungsinformationen, Diagnosedaten, geographische Positionen oder Sicherheitsinformationen der Fahrzeuge oder Maschinen und sind für Steuerungs- oder Überwachungsinstanzen von wesentlichem Interesse. Daher findet eine Übertragung der genannten Dateien von den Maschinen oder Fahrzeugen hin zu den Überwachungs- oder Steuerungsinstanzen statt. Üblicherweise werden diese Dateien gemäß einem vorgebbaren Zeitplan übertragen. Dabei kann es sein, dass ein vorbestimmter Typ von Dateien lediglich einmal am Tag übertragen wird, ein anderer vorbestimmter Typ von Dateien hingegen beispielsweise im Sekundentakt oder Minutentakt. Zudem werden Dateien üblicherweise in einer Reihenfolge gemäß deren Auftretens übersandt. Unvorhergesehene Ereignisse, wie Engpässe bei einer Datenübertragung aufgrund einer beispielsweise schlechten Empfangsqualität oder einem ungewöhnlich hohen Anfall an Dateien oder Datenmengen, können jedoch dazu führen, dass Dateien und somit Informationen zu spät an eine Steuerungs- oder Überwachungsinstanz übertragen werden. Dieses Problem wird bislang gelöst, indem für Dateitypen vorbestimmter Art eine größere Anzahl an Zeitfenstern oder vergleichsweise lange Zeitfenster vorgesehen werden.

Aufgabe der Erfindung ist es, eine Steuerung für eine Übertragung von Dateien zu verbessern.

Diese Aufgabe wird gelöst durch ein Verfahren mit den Merkmalen des unabhängigen Anspruchs 1. Des Weiteren wird diese Aufgabe gelöst durch eine Vorrichtung mit den Merkmalen des nebengeordneten Vorrichtungsanspruchs sowie durch ein System mit den Merkmalen des nebengeordneten Systemanspruchs.

Zudem liegt der Erfindung die Aufgabe zugrunde, ein Computerprogramm zur Durchführung des erfindungsgemäßen Verfahrens mit der erfindungsgemäßen Vorrichtung und/oder mit dem erfindungsgemäßen System bereitzustellen.

Diese Aufgabe wird gelöst durch ein Computerprogramm mit den Merkmalen des nebengeordneten Computerprogrammanspruchs sowie durch ein computerlesbares Medium mit den Merkmalen des nebengeordneten Anspruchs das computerlesebare Medium betreffend.

Vorteilhafte Weiterbildungen der vorliegenden Erfindung können jeweils abhängigen Unteransprüchen entnommen werden.

Das erfindungsgemäße Verfahren zur Steuerung einer Übertragung von Dateien sieht vor, eine Art eines Inhalts von zu übertragenden Dateien zu ermitteln. Auf Basis der Art des Inhalts der Dateien wird den zu übertragenden Dateien wenigstens ein Attribut zugeordnet. Des Weiteren werden die zu übertragenden Dateien in Abhängigkeit von dem wenigstens einen Attribut übertragen.

Unter einem Attribut soll vorliegend ein Attribut im Sinne der Informatik verstanden werden, wonach jedes Attribut gemäß einer Art eines Inhalts einer Datei dieser Datei wenigstens ein Merkmal oder eine Eigenschaft sowie wenigstens eine Ausprägung dieses Merkmals oder dieser Eigenschaft zuordnet. Bei einer Art eines Inhalts einer Datei kann es sich beispielsweise um Mediendaten, Prozessdaten, Servicedaten, Wartungsdaten, Kommunikationsdaten, Fahrplandaten, Fahrzeugdaten, Maschinendaten und/oder Sicherheitsdaten handeln.

Auf diese Weise kann ein Dateiübertragungsvorgang aufwandsgünstig gesteuert werden. Aus einer großen Anzahl an zu übertragenden Dateien kann so eine Auswahl einzelner zu übertragender Dateien vereinfacht und beschleunigt werden.

Eine vorteilhafte Weiterbildung sieht vor, dass wenigstens einem Teil der zu übertragenden Dateien als das wenigstens eine Attribut ein Attribut erster Art zugeordnet wird. Nach dessen Maßgabe wird diesen Dateien jeweils eine Relevanz zugeordnet. Für jede zu übertragende Datei kann so festgelegt werden, ob eine Übertragung zurückgestellt werden, bevorzugt werden oder gar sofort erfolgen soll. Eine große Anzahl an zu übertragenden Dateien kann so schnell und effizient im Hinblick auf deren Relevanz bewertet und/oder sortiert werden.

Eine weitere vorteilhafte Weiterbildung sieht vor, dass wenigstens einem Teil der zu übertragenden Dateien als das wenigstens eine Attribut ein Attribut zweiter Art zugeordnet wird. Ein Inhalt dieser Dateien, welchen das Attribut zweiter Art zugeordnet wird, wird daraufhin ausgewertet. Nach Maßgabe eines Ergebnisses dieser Auswertung wird diesen Dateien jeweils eine Relevanz zugeordnet. Dies ermöglicht es, eine einfache Differenzierung und rasche Bewertung von Dateien vorzunehmen, deren Relevanz abhängig von deren tatsächlichen Inhalt ist. Vorzugsweise wird Protokolldateien, auch Logdateien genannt, das Attribut zweiter Art zugeordnet. In Protokolldateien werden üblicherweise vorbestimmte Ereignisse protokolliert. Beispielsweise kann es sich bei der Protokolldatei um eine Sicherheitsprotokolldatei handeln, deren Inhalt eine digitale Sicherheit betrifft. In dieser können unter anderem eine Anzahl an fehlgeschlagenen oder erfolgreichen Authentifizierung-und/oder Autorisierungsversuche protokolliert sein. Ein weiteres Beispiel einer Protokolldatei stellt eine sogenannte "Audit Trail Logdatei" dar. Hierin werden Änderungsanfragen aufgezeichnet, unabhängig davon, ob diese umgesetzt wurden oder nicht. Indem Inhalte solcher Protokolldateien ausgewertet werden, können mögliche digitale Angriffe auf Maschinen oder Fahrzeuge oder fehlerhafte Betriebszustände von Maschinen oder Fahrzeugen frühzeitig erkannt werden. Je nach Ergebnis der vorgenannten Auswertung kann so eine einfache Sortierung von Protokolldateien nach relevanten Inhalten oder weniger relevanten Inhalten realisiert werden.

Des Weiteren sieht eine vorteilhafte Weiterbildung vor, dass wenigstens einem Teil der zu übertragenden Dateien als das wenigstens eine Attribut ein Attribut dritter Art zugeordnet wird, gemäß welchem Dateien auf Basis einer Art deren Inhalts jeweils einer vorbestimmten Kategorie zugeordnet werden. Auf diese Weise kann eine Vorsortierung einer hohen Anzahl an zu übertragenden Dateien derselben Art oder eine Gruppierung von vorbestimmten Dateien unterschiedlicher Art realisiert werden. Ferner können Dateien, welche beispielhaft einer Art nach Prozessdaten betreffen, entsprechenden Unterkategorien zugeordnet werden. Für Prozessdaten besteht die Möglichkeit diese unter anderem Unterkategorien zuzuordnen, welche einen Antrieb, eine Energieversorgung, eine Klimatisierung oder weitere interne oder externe Prozesse betreffen. In Abhängigkeit einer gegebenen Interessenlage kann so rasch und zuverlässig eine Übertragung von Dateien einer vorbestimmten Kategorie veranlasst werden. Zudem wird auf diese Weise eine mögliche Zuordnung weiterer Attribute in Abhängigkeit von einer Kategorie vereinfacht.

Ferner sieht eine vorteilhafte Weiterbildung vor, wenigstens einem Teil der zu übertragenden Dateien als das wenigstens eine Attribut ein Attribut vierter Art zuzuordnen. Diese Dateien werden zum Zwecke einer gemeinsamen Übertragung zu wenigstens einer gemeinsamen Datei zusammengefasst. Dies ermöglicht es, eine effiziente und kostengünstige Übertragung von Dateien zu realisieren. So können Zeiten für einen Verbindungsaufbau sowie ein hierfür erforderliches Datenvolumen reduziert und eingespart werden. Zudem kann beispielsweise eine Anzahl an Authentisierungen oder im Falle einer verschlüsselten Verbindung eine Anzahl an Schlüsselaustauschvorgängen verringert werden. Eine auf die vorgenannte Art zusammengefasste Datei kann beispielsweise als ein Archiv ausgebildet sein. Eine Übertragung der zusammengefassten Datei kann beispielsweise in Abhängigkeit einer vorgebbaren Zeit oder in Abhängigkeit von vorgebbaren Ereignissen übersandt werden. Bevorzugt erfolgt eine Erstellung der zusammengefassten Datei anhand einer Vielzahl an Dateien, welche jeweils eine verhältnismäßig geringe Dateigröße aufweisen.

Eine vorteilhafte Ausführungsvariante sieht vor, dass zumindest einem Teil der Dateien, welchen das Attribut vierter Art zugeordnet ist, ein Attribut erster Art oder ein Attribut zweiter Art zugeordnet wird. Die gemäß dem Attribut vierter Art aus einzelnen Dateien zusammengefasste Datei wird in Abhängigkeit von einer höchsten einer der genannten einzelnen Dateien nach Maßgabe des Attributs erster Art oder zweiter Art zugeordneten Relevanz übertragen. Somit wird eine Übertragung einer zusammengefassten Datei von einer höchsten Relevanz der einzelnen Dateien abhängig gemacht. Dies ermöglicht es, eine Übertragung vorbestimmter Dateien so lange zu verzögern, bis ein für die Übertragung auslösender Grund vorliegt. Vorzugsweise werden Dateien, deren Inhalt Diagnosedaten oder Sicherheitsdaten betreffen auf diese Weise übertragen. Diese können solange zu einer gemeinsamen Datei zusammengefasst werden, bis ein Inhalt einer dieser genannten Dateien einen von einem vordefinierten Normalzustand erheblich abweichenden Zustand notiert. Zudem bietet die zusammengefasste Datei den Vorteil, entsprechende Dateien gemäß einer Historie von Ereignissen sortiert zu übertragen und/oder auszuwerten.

Ferner sieht eine vorteilhafte Weiterbildung vor, einem Empfänger der zu übertragenden Dateien eine Information betreffend die zu übertragenden Dateien und eine diesbezügliche Zuordnung des wenigstens einen Attributs zu übertragen. Solche Informationen können unter anderem eine Art des Inhalts der Datei, eine Dateigröße, eine Anzahl von Datensätzen, eine Anzahl von Datensätzen pro Datensatztyp, einen Ersteller der Datei oder eine Herkunft der Datei betreffen. Auf Basis der auf diese Weise übertragenen Informationen kann es dem Empfänger ermöglicht werden, eigene Systemressourcen, wie eine Speicherkapazität, eine Rechenleistung oder eine Anzahl an Übertragungskanälen an einen Umfang zu empfangender Dateien frühzeitig anzupassen und/oder zu planen. Des Weiteren wird es auf diese Weise dem Empfänger ermöglicht, den zu übertragenden Dateien auf Basis dieser Information eigene Attribute zuzuordnen.

Eine vorteilhafte Ausführungsvariante sieht vor, dass auf Basis der genannten Information zu übertragende Dateien mittels des Empfängers ausgelesen werden. Der Empfänger kann so nach Maßgabe einer eigenen Interessenlage einen Zeitpunkt oder eine Reihenfolge von zu übertragenden Dateien selbst bestimmen.

In einer anderen vorteilhaften Weiterbildung wird vorgesehen, dass eine Ausprägung eines Merkmals oder einer Eigenschaft des wenigstens einen Attributs von einem Empfänger der zu übertragenden Dateien vorgegeben wird. So können Bewertungs- oder Auswertungsmaßstäbe schnell und flexibel von einer Steuerungs- oder Überwachungsinstanz angepasst werden. Insbesondere wird eine rasche Anpassung an eine von einem Empfänger erkannte geänderte Gefährdungslage ermöglicht. Zuordnungskriterien, welche vorzugsweise sicherheitsrelevante Dateien betreffen, können auf diese Weise schnell an eine geänderte Gefährdungslage angepasst werden. Eine Übertragung von zunächst als weniger relevant eingestuften Dateien kann sodann bevorzugt erfolgen.

Eine vorteilhafte Ausführungsvariante sieht vor, dass Dateien gemäß einer Art deren Inhalts in vorbestimmten zeitlichen Abständen übertragen werden. Diese genannten zeitlichen Abstände werden auf Basis der Attribute erster Art oder zweiter Art angepasst. Vorzugsweise werden diese genannten zeitlichen Abstände auf Basis der Attribute erster Art oder Attribute zweiter Art verkürzt oder verlängert. Eine gemäß einer sich wiederholenden Abfolge von Übertragungszeiten realisierten Übertragung von Dateien verschiedener Art kann so einfach und aufwandsgünstig gesteuert werden. Im Falle eines Auftretens von Engpässen bei der Übertragung der Dateien aufgrund eines beispielsweise begrenzten Datenvolumens, einer begrenzten Bandbreite oder einer schlechten Empfangsqualität, wird es ermöglicht, Dateien hoher Relevanz weiterhin zu übertragen und eine Übertragung solcher Dateien mit geringerer oder keiner zugeordneten Relevanz zurückzustellen.

Des Weiteren sieht eine vorteilhafte Weiterbildung vor, dass die zu übertragenden Dateien zwischen einem mobilen Kommunikationsteilnehmer und einem stationären Kommunikationsteilnehmer übertragen werden. Insbesondere werden die zu übertragenden Dateien mittels eines Mobilfunknetzes zwischen den genannten Kommunikationsteilnehmern übertragen. Trotz möglicher Engpässe bei einer Dateiübertragung, aufgrund eines beispielsweise schlechten Empfangs oder eines begrenzten Datenvolumens, kann so eine hohe Betriebssicherheit bereitgestellt werden.

Mit der erfindungsgemäßen Vorrichtung wird das erfindungsgemäße Verfahren durchgeführt.

Hierzu weist die Vorrichtung wenigstens eine Datenverarbeitungsvorrichtung auf. Diese Datenverarbeitungsvorrichtung ist dazu eingerichtet, eine Art eines Inhalts von zu übertragenden Dateien zu ermitteln. Des Weiteren ist diese Datenverarbeitungsvorrichtung dazu eingerichtet, den zu übertragenden Dateien auf Basis der Art deren Inhalts wenigstens ein Attribut zuzuordnen. Zudem ist die Datenverarbeitungsvorrichtung dazu eingerichtet, die zu übertragenden Dateien in Abhängigkeit des wenigstens einen Attributs zu übertragen.

Bei der Datenverarbeitungsvorrichtung kann es sich beispielsweise um einen Computer, einen Mikrocontroller, einen Prozessor oder eine andere programmierbare Hardwarekomponente handeln. Ferner ist es denkbar, dass es sich bei der Datenverarbeitungsvorrichtung um eine virtualisierte Hardwareressource einer Rechnerwolke oder um eine Laufzeitumgebung mit veränderbaren Rechen- und/oder Speicherkapazitäten handelt. Die genannte Laufzeitumgebung soll im Sinne der Informatik verstanden werden. Beispielsweise ist die Laufzeitumgebung dazu eingerichtet, Daten einzulesen, zu schreiben, zu übertragen und/oder zu verwalten.

Dies ermöglicht es, die Übertragung von Dateien aufwandsgünstig zu steuern und so eine effiziente Übertragung von Dateien zu realisieren.

Des Weiteren ist das erfindungsgemäße Verfahren mit dem erfindungsgemäßen System durchführbar.

Das System weist einen stationären Kommunikationsteilnehmer auf, welcher dazu eingerichtet ist, mittels eines Mobilfunknetzes zu kommunizieren. Des Weiteren weist das System einen mobilen Kommunikationsteilnehmer auf. Dieser weist wiederum eine Vorrichtung mit wenigstens einer Datenverarbeitungsvorrichtung auf. Dabei handelt es sich bei der genannten Datenverarbeitungsvorrichtung insbesondere um die zuvor beschriebene Datenverarbeitungsvorrichtung. Zudem handelt es sich bei der genannten Vorrichtung insbesondere um die zuvor genannte erfindungsgemäße Vorrichtung. Die genannte Vorrichtung des Systems ist des Weiteren dazu eingerichtet, mittels des Mobilfunknetzes Dateien an den stationären Kommunikationsteilnehmer zu übertragen. Vorzugsweise handelt es sich bei dem mobilen Kommunikationsteilnehmer um ein Fahrzeug. Besonders bevorzugt ist das genannte Fahrzeug als ein schienengebundenes Fahrzeug ausgebildet.

Das erfindungsgemäße System ermöglicht eine effiziente Nutzung einer üblicherweise in einem Mobilfunknetz beschränkten Datenübertragungskapazität, Anzahl an Übertragungskanälen und/oder nutzbaren Datenvolumens. Trotz einer schlechten Netzabdeckung oder einer lokalen Überlastung des Mobilfunknetzes kann so eine zuverlässige Überwachung und/oder Steuerung des mobilen Kommunikationsteilnehmers aufrechterhalten werden. Im Falle eines Engpasses bei einer Übertragungskapazität kann eine Kommunikation mit dem stationären Kommunikationsteilnehmer auf sicherheitsrelevante Dateien, welche beispielhaft Diagnosedaten oder Prozessdaten betreffen, reduziert werden. Auf eine Übertragung von unter anderem Mediendaten, welche beispielsweise allein dem Zweck einer Unterhaltung dienen, kann im Falle von auftretenden Engpässen abgesehen werden.

Des Weiteren ist erfindungsgemäß ein Computerprogramm vorgesehen, welches bei dessen Ausführung die erfindungsgemäße Vorrichtung dazu veranlasst, das erfindungsgemäße Verfahren durchzuführen.

Zudem sieht die Erfindung ein Computerprogramm vor, welches bei dessen Ausführung das erfindungsgemäße System dazu veranlasst, das erfindungsgemäße Verfahren durchzuführen.

Des Weiteren wird ein computerlesbares Medium vorgeschlagen. Dieses weist Instruktionen auf, welche die erfindungsgemäße Vorrichtung dazu veranlassen, das erfindungsgemäße Verfahren durchzuführen. Alternativ oder zusätzlich weist das computerlesbare Medium Instruktionen auf, welche das erfindungsgemäße System dazu veranlassen, das erfindungsgemäße Verfahren durchzuführen. Bei dem computerlesbaren Medium kann es sich beispielsweise um eine CD-Rom, eine DVD, einen USB- oder Flash-Speicher oder um ein nicht körperliches Medium, wie ein Datenstrom und/oder ein Datenträgersignal handeln.

Die voranstehend beschriebenen Eigenschaften, Merkmale und Vorteile der Erfindung sowie die Art und Weise, wie diese erreicht werden, werden im Zusammenhang mit den Figuren in der folgenden Beschreibung der Ausführungen der Erfindung näher erläutert. Soweit zweckdienlich, werden in den Figuren dieselben Bezugszeichen für dieselben oder einander entsprechende Elemente der Erfindung verwendet. Das Ausführungsbeispiel dient der Erläuterung der Erfindung und beschränkt die Erfindung nicht auf die darin angegebenen Kombinationen von Merkmalen, auch nicht in Bezug auf funktionale Merkmale. Zudem können alle in dem Ausführungsbeispiel angegebenen Merkmale isoliert betrachtet und in geeigneter Weise mit den Merkmalen eines beliebigen Anspruchs kombiniert werden.

Es zeigen:
- FIG 1: eine schematische Darstellung eines Ausführungsbeispiels eines erfindungsgemäßen Systems, welches beispielhaft eine erfindungsgemäße Vorrichtung aufweist, sowie eine Illustration eines allgemeinen Beispiels eines erfindungsgemäßen Verfahrens;
- FIG 2: eine Illustration eines speziellen Beispiels des erfindungsgemäßen Verfahrens.

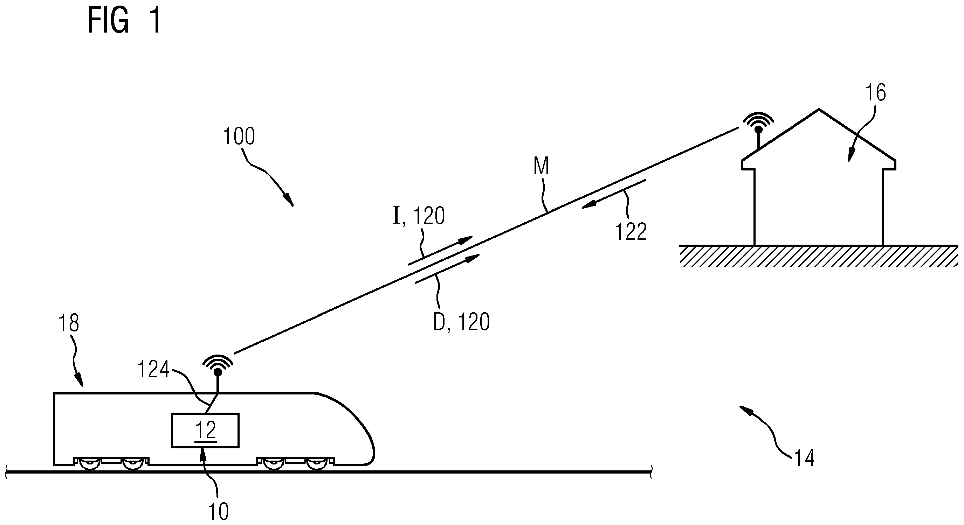

FIG 1 zeigt ein Ausführungsbeispiel eines Systems 14 sowie ein Ausführungsbeispiel einer Vorrichtung 10 in einer schematischen Darstellung. Des Weiteren illustriert FIG 1 ein allgemeines Beispiel eines Verfahrens 100 zur Steuerung einer Übertragung von Dateien D.

In dem in FIG 1 gezeigten Ausführungsbeispiel des Systems 14 werden Dateien D zwischen einem schienengebundenen Fahrzeug 18 und einem stationären Kommunikationsteilnehmer 16 übertragen 120. Diese Übertragung 120 von Dateien D findet beispielhaft mittels eines Mobilfunknetzes M statt. Während eines Betriebs des schienengebundenen Fahrzeugs 18 werden stetig neue Dateien D verschiedenster Art generiert, welche an den stationären Kommunikationsteilnehmer 16 übersandt werden sollen. Mittels des stationären Kommunikationsteilnehmers 16, welcher im Zusammenhang mit einer Kommunikation von schienengebundenen Fahrzeugen auch Landseite genannt wird, wird das schienengebundene Fahrzeug 18 unter anderem auf dessen Betriebszustand, dessen geographischer Position oder dessen Auslastung hin überwacht. Bei den dabei zu übertragenden Dateien D kann es sich beispielsweise um solche handeln, welche Mediendaten, Prozessdaten, Servicedaten, Wartungsdaten, Kommunikationsdaten, Fahrplandaten, Fahrzeugdaten oder andere, während eines Fahrbetriebs des schienengebundenen Fahrzeugs 18 anfallende Daten betreffen.

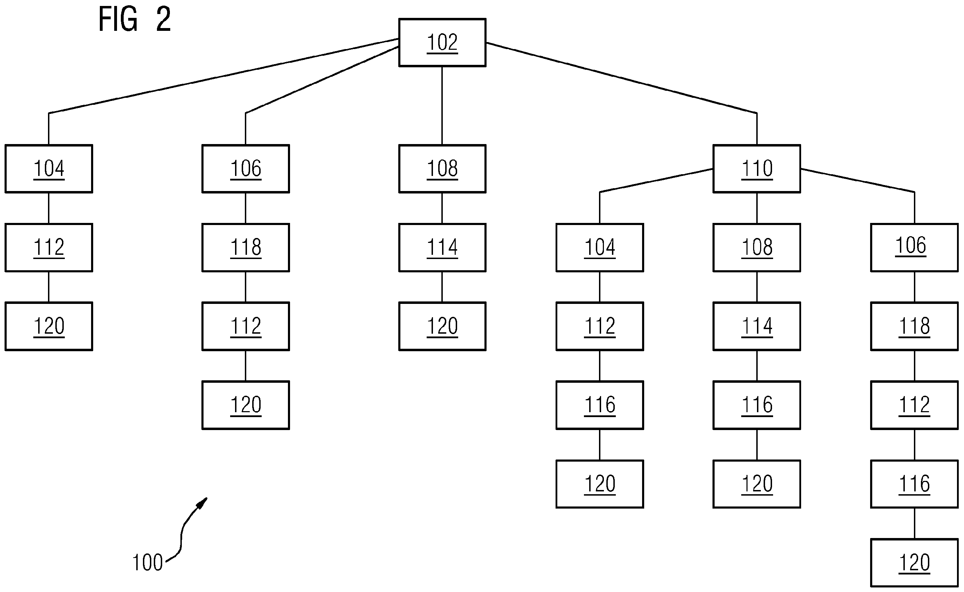

Im vorliegend beschriebenen Ausführungsbeispiel wird des Weiteren beispielhaft zum Zwecke einer Strukturierung eine Übertragung dieser Dateien D verschiedener Art nach Vorgabe eines Zeitplans realisiert. Hiernach wird Dateien D vorbestimmter Art jeweils in vorgegebenen Zeitabständen ein Zeitfenster zugeordnet, während diese Dateien D übertragen werden 120. Auf diese Weise wird eine sich teilweise wiederholende Abfolge von Zeitfenstern vorgegeben, innerhalb derer eine Übertragung 120 von Dateien D jeweils vorbestimmter Art erfolgt. Die genannten zeitlichen Abstände oder Zeitfenster können je nach Art eines Inhalts der Dateien D verschiedenen lang vorgegeben sein. Dabei können die genannten zeitlichen Abstände wenige Sekunden, Minuten oder auch Tage betragen. Im Falle eines Engpasses bei einer Datenübertragung mittels des Mobilfunknetzes M können daher jedoch erhebliche Verzögerungen bei einer Übertragung 120 von Dateien D vorbestimmter Art auftreten. Um dabei zu verhindern, dass eine Überwachung oder eine Betriebssicherheit des schienengebundenen Fahrzeugs 18 beeinträchtigt wird, indem beispielsweise zeitkritische Informationen unangemessen verzögert übertragen werden 120, wird diese Übertragung 120 der Dateien D mittels der Datenverarbeitungsvorrichtung 12 der Vorrichtung 10 gesteuert. Zum Zwecke der Steuerung der Übertragung der Dateien D ist die Datenverarbeitungsvorrichtung 12 dazu eingerichtet, das im Zusammenhang mit FIG 2 näher erläuterte spezielle Beispiel des Verfahrens 100 durchzuführen.

FIG 2 illustriert ein Beispiel des Verfahrens 100 zur Steuerung der Übertragung 120 von Dateien D. Hierbei wird zunächst eine Art eines Inhalts der zu übertragenden Dateien D ermittelt 102. Eine solche Art eines Inhalts kann beispielsweise Mediendaten, Prozessdaten, Servicedaten, Wartungsdaten, Kommunikationsdaten, Fahrplandaten, Fahrzeugdaten oder andere, während eines Fahrbetriebs des schienengebundenen Fahrzeugs 18 anfallende Daten betreffen. Des Weiteren wird den zu übertragenden Dateien D je nach einer Art deren Inhalts wenigstens ein Attribut zugeordnet 104, 106, 108, 110.

Im vorliegend illustrierten Beispiel des Verfahrens 100 wird einem Teil der zu übertragenden Dateien D ein Attribut erster Art zugeordnet 104. Nach dessen Maßgabe wird eine Datei D je nach Art deren Inhalts eine Relevanz zugeordnet 112. Betrifft ein Inhalt der Datei D beispielsweise Mediendaten oder Fahrplandaten, so wird dieser Datei D zunächst eine geringere Relevanz zugeordnet 112 als einer Datei D, deren Inhalt Prozessdaten oder Diagnosedaten betrifft.

Des Weiteren illustriert FIG 2 beispielhaft, dass einer zu übertragenden Datei D in Abhängigkeit von einem ermittelten Inhalt 102 dieser Datei D ein Attribut zweiter Art zugeordnet wird 106. Der Inhalt dieser Datei D, welcher das Attribut zweiter Art zugeordnet wurde 106, wird zunächst ausgewertet 118. Daraufhin wird nach Maßgabe eines Ergebnisses dieser Auswertung 118 dieser Datei D eine Relevanz zugeordnet 112. Eine Zuordnung 106 des Attributs zweiter Art eignet sich beispielsweise für Protokolldateien oder Diagnosedateien, deren Relevanz von deren tatsächlichen Inhalt abhängt. Beispielsweise können in einer Sicherheitsprotokolldatei fehlgeschlagene oder erfolgreiche Authentifizierungs- und/oder Autorisierungsversuche zusammengefasst werden. Eine Relevanz dieser Sicherheitsprotokolldateien richtet sich insbesondere nach einer Anzahl an fehlgeschlagenen Authentifizierungs- und/oder Autorisierungsversuchen. Mittels des Attributs zweiter Art kann so der Sicherheitsprotokolldatei eine Relevanz in Abhängigkeit von deren Inhalt zugeordnet werden 112. Wurde eine Anzahl an fehlgeschlagenen Authentifizierungs- und/oder Autorisierungsversuchen protokolliert, welche unterhalb eines vorgebbaren Grenzwerts liegt, so wird dieser Datei keine oder lediglich eine geringe Relevanz zugeordnet 112. Liegt eine protokollierte Anzahl an fehlgeschlagenen Authentifizierungs- und/oder Autorisierungsversuchen dahingegen über dem vorgebbaren Grenzwert, so wird dieser Sicherheitsprotokolldatei eine hohe Relevanz zugeordnet 112. Des Weiteren ist denkbar, dass Inhalte von Dateien D, welchen das Attribut zweiter Art zugeordnet ist 106, nach Maßgabe des Attributs zweiter Art auf ein Muster hin ausgewertet werden 118. Solche Muster können beispielsweise bei einer Auswertung 118 einer Sicherheitsprotokolldatei auf einen digitalen Angriff oder im Falle von Prozessdaten auf einen bevorstehenden Ausfall von Betriebskomponenten hinweisen. In Abhängigkeit von einer solchen Auswertung 118 wird sodann der jeweiligen Datei D eine dem Ergebnis entsprechende Relevanz zugeordnet 112.

Des Weiteren sieht das in FIG 2 beispielhaft illustrierte Verfahren 100 vor, wenigstens einer zu übertragenden Datei D ein Attribut dritter Art zuzuordnen 108. Anhand des Attributs dritter Art wird die jeweilige Datei D auf Basis einer Art deren Inhalts einer vorbestimmten Kategorie zugeordnet 114. Beispielsweise können so Dateien D mit verschieden geartetem Inhalt in eine Kategorie zusammengefasst werden 114. Denkbar ist dabei, dass dieser Kategorie eine Relevanz zugeordnet werden kann 112. Im vorliegend beschriebenen Beispiel des Verfahrens 100 ist eine Zuordnung einer Relevanz 112 zu einer solchen Kategorie jedoch nicht vorgesehen. Am Beispiel des im Zusammenhang mit FIG 1 beschriebenen Zeitplans wird für eine solche Kategorie stattdessen beispielhaft ein eigenes Zeitfenster vorgesehen. Alternativ oder zusätzlich ist es denkbar, dass Dateien D mit Inhalt gleicher Art, auf eine nicht näher illustrierte Weise, in verschiedene Unterkategorien aufgeteilt werden 114. Dateien D, welche einer vorbestimmten Unterkategorie zugeordnet wurden 114, kann zusätzlich ein Attribut erster Art oder zweiter Art in der zuvor beschriebenen und in FIG 2 illustrierten Weise zugeordnet werden 104, 106. Dies ermöglicht eine effiziente und schnelle Differenzierung von Dateien D mit Inhalt gleicher Art. Insbesondere bietet sich diese Verfahrensweise für Dateien D an, welche Prozessdaten verschiedener Prozesse betreffen. So können Prozessdaten nach Prozessen sortiert werden, welche unter anderem einen Antrieb, eine Steuerung, eine Raumklimatisierung oder eine Energieversorgung betreffen. Einer Unterkategorie entsprechend wird es so ermöglicht, diesen Dateien D weitere adäquate Attribute erster Art oder zweiter Art zuzuordnen 104, 106. Auf diese Weise kann der Steuerungsvorgang mittels Vorsortierung der Dateien D beschleunigt werden.

Ferner sieht das in FIG 2 illustrierte Verfahren 100 beispielhaft vor, dass zu übertragenden Dateien D ein Attribut vierter Art zugeordnet wird 110. Dateien D, welchen das Attribut vierter Art zugeordnet wird 110, werden zum Zwecke einer gemeinsamen Übertragung zu wenigstens einer gemeinsamen Datei zusammengefasst 116. Auf diese Weise können Zeiten für einen Verbindungsaufbau sowie ein hierfür erforderliches Datenvolumen eingespart werden. Beispielsweise kann eine Anzahl an Authentisierungen zu Herstellung einer Kommunikationsverbindung oder eine Anzahl an Schlüsselaustauschvorgängen für eine verschlüsselte Verbindung reduziert werden. Die zusammengefasste Datei kann sowohl Dateien D derselben Art eines Inhalts sowie Dateien D verschieden gearteten Inhalts aufweisen. Ferner kann eine solche zusammengefasste Datei Dateien D aufweisen, welchen auf die bereits zuvor beschriebene und durch FIG 2 illustrierte Weise Attribute erster Art, zweiter Art und/oder dritter Art zugeordnet wurden 104, 106, 108. Vorzugsweise werden Protokolldateien zusammengefasst übertragen 120, welche naturgemäß jeweils eine nur sehr kleine Dateigröße aufweisen.

Eine Übertragung 120 der zusammengefassten Datei richtet sich im vorliegend beschriebenen Ausführungsbeispiel nach den Attributen der in die zusammengefasste Datei aufgenommenen Dateien D. Weist die zusammengefasste Datei wenigstens eine Datei D auf, welcher nach Maßgabe des Attributs erster Art oder zweiter Art eine Relevanz zugeordnet wurde 112, so richtet sich eine Übertragung 120 dieser zusammengefassten Datei nach einer höchsten einer der zu übertragenden Dateien D zugeordneten Relevanz 112.

Das im Zusammenhang mit FIG 2 beschriebene Beispiel des Verfahrens 100 kann unabhängig von der beispielhaft im Zusammenhang mit FIG 1 beschriebenen auf einem Zeitplan basierenden Übertragung von Dateien D realisiert werden. Beispielsweise kann eine Übertragung von Dateien D allein mittels des Verfahrens 100 gesteuert werden oder dem Verfahren 100 zu Steuerung der Übertragung kann eine auf vorbestimmten Ereignissen basierende oder auf Anfrage des stationären Kommunikationsteilnehmers 16 basierende Übertragungsart zugrunde liegen.

Im Rahmen des vorliegenden Ausführungsbeispiels wird das in Zusammenhang mit FIG 1 beschriebene Verfahren 100 auf die im Zusammenhang mit FIG 2 beschriebene präzisierte Weise gesteuert, indem Dateien D in Abhängigkeit von dem wenigstens einen zugeordneten Attribut übertragen werden 120. Dabei findet eine Übertragung der Dateien D grundsätzlich gemäß dem zuvor im Zusammenhang mit FIG 1 beschriebenen Zeitplan statt. In Abhängigkeit von einer mittels der Attribute erster Art oder zweiter Art zugeordneten Relevanz 112, wird gegebenenfalls jedoch von diesem genannten Zeitplan abgewichen. Hierzu werden entweder zeitliche Abstände oder eine Anordnung von Zeitfenstern verändert 124. Des Weiteren werden Dateien D in Abhängigkeit von einer diesen zugeordneten Relevanz 112 entweder sofort übertragen 120, gegenüber anderen Dateien D bevorzugt übertragen 120 oder eine Übertragung 120 dieser Dateien D wird zurückgestellt. Beispielhaft wird zum Zwecke einer bevorzugten Übertragung 120 oder einer Zurückstellung einer Übertragung 120 der Dateien D zeitliche Abstände des vorgegebenen Zeitplans auf Basis der Attribute erster Art oder zweiter Art angepasst 124.

Des Weiteren sieht das im Zusammenhang mit FIG 1 beschriebene Beispiel des Verfahrens 100 vor, dass das schienengebundene Fahrzeug 18 mittels der Datenverarbeitungsvorrichtung 12 dem stationären Kommunikationsteilnehmer 16 eine Information I überträgt 120, welche die zu übertragenden Dateien D und eine diesbezügliche Zuordnung der Attribute 104, 106, 108, 110 betrifft. Der stationäre Kommunikationsteilnehmer 16 kann auf diese Weise nach Maßgabe der eigenen Interessenlage einen Zeitpunkt oder eine Reihenfolge von zu übertragenden Dateien D selbst bestimmen. Vorzugsweise kann der stationäre Kommunikationsteilnehmer 16 nach eigener Interessenlage einen Zeitpunkt und/oder eine Reihenfolge einer Übertragung vorbestimmter Dateien D unabhängig von dem vorgenannten Zeitplan bestimmen. Anhand der übersandten Information I wird es dem stationären Kommunikationsteilnehmer 16 ermöglicht, eine Anpassung einer Kapazität eigener Systemressourcen vorzunehmen. Beispielsweise können so vor einer Übertragung großer Dateien D Speicherkapazitäten, Rechenleistungen oder eine Anzahl an Übertragungskanälen angepasst werden. Des Weiteren sieht das beispielhaft in FIG 1 und FIG 2 illustrierte Verfahren 100 vor, dass eine Ausprägung eines Merkmals oder einer Eigenschaft des wenigstens eines Attributs von dem stationären Kommunikationsteilnehmer 16 vorgegeben wird 122 oder durch diesen angepasst wird. Erkennt der stationäre Kommunikationsteilnehmer 16 beispielsweise eine neue Gefährdungslage, wie ein neues Muster, durch welches ein digitaler Angriff erkannt werden kann, so kann dieser rasch eine diesbezügliche Zuordnung und Bewertung von zu übertragenden Dateien D durch die Datenverarbeitungsvorrichtung 12 veranlassen.

Obwohl die Erfindung im Detail durch die bevorzugten Ausführungen näher illustriert und beschrieben wurde, ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren (100) zur Steuerung einer Übertragung von Dateien (D),
bei welchem
- eine Art eines Inhalts von zu übertragenden Dateien (D) ermittelt wird (102);
- den zu übertragenden Dateien (D) auf Basis der Art deren Inhalts wenigstens ein Attribut zugeordnet wird (104, 106, 108, 110);
- die zu übertragenden Dateien (D) in Abhängigkeit von dem wenigstens einen Attribut übertragen werden (120).

2. Verfahren (100) nach Anspruch 1,
bei welchem wenigstens einem Teil der zu übertragenden Dateien (D) als das wenigstens eine Attribut ein Attribut erster Art zugeordnet wird (104), nach dessen Maßgabe diesen Dateien (D) jeweils eine Relevanz zugeordnet wird (112).

3. Verfahren (100) nach Anspruch 1 oder 2,
bei welchem
- wenigstens einem Teil der zu übertragenden Dateien (D) als das wenigstens eine Attribut ein Attribut zweiter Art zugeordnet wird (106);
- ein Inhalt dieses Teils der Dateien (D), welchem das Attribut zweiter Art zugeordnet ist (106), ausgewertet wird (118) und nach Maßgabe eines Ergebnisses dieser Auswertung diesen Dateien (D) jeweils eine Relevanz zugeordnet wird (112).

4. Verfahren (100) nach einem der vorhergehenden Ansprüche, bei welchem wenigstens einem Teil der zu übertragenden Dateien (D) als das wenigstens eine Attribut ein Attribut dritter Art zugeordnet wird (108), gemäß welchem Dateien (D) auf Basis einer Art deren Inhalts jeweils einer vorbestimmten Kategorie zugeordnet werden (114).

5. Verfahren (100) nach einem der vorhergehenden Ansprüche, bei welchem
- wenigstens einem Teil der zu übertragenden Dateien (D) als das wenigstens eine Attribut ein Attribut vierter Art zugeordnet wird (110);
- diese Dateien (D), welchen das Attribut vierter Art zugeordnet ist (110), zum Zwecke einer gemeinsamen Übertragung zu wenigstens einer gemeinsamen Datei zusammengefasst werden (116).

6. Verfahren (100) nach Anspruch 5,
bei welchem
- zumindest einem Teil der Dateien (D), welchen das Attribut vierter Art zugeordnet ist (110), ein Attribut erster Art oder ein Attribut zweiter Art zugeordnet wird (104, 106);
- die gemäß dem Attribut vierter Art aus einzelnen Dateien D zusammengefasste Datei (116) in Abhängigkeit von einer höchsten einer der genannten einzelnen Dateien D nach Maßgabe des Attributs erster Art oder zweiter Art zugeordneten Relevanz (112) übertragen wird (120).

7. Verfahren (100) nach einem der vorhergehenden Ansprüche, bei welchem einem Empfänger (16) der zu übertragenden Dateien (D) eine Information (I) betreffend die zu übertragenden Dateien (D) und eine diesbezügliche Zuordnung des wenigstens einen Attributs übertragen wird (120).

8. Verfahren (100) nach einem der vorhergehenden Ansprüche, bei welchem eine Ausprägung eines Merkmals oder einer Eigenschaft des wenigstens einen Attributs von einem Empfänger (16) der zu übertragenden Dateien (D) vorgegeben wird (122).

9. Verfahren (100) nach einem der Ansprüche 2 bis 8,
bei welchem
- Dateien (D) gemäß einer Art deren Inhalts in vorbestimmten zeitlichen Abständen übertragen werden (120);
- diese zeitlichen Abstände auf Basis der Attribute erster Art oder zweiter Art angepasst werden (124).

10. Verfahren (100) nach einem der vorhergehenden Ansprüche, bei welchem die zu übertragenden Dateien (D) zwischen einem mobilen Kommunikationsteilnehmer (18) und einem stationären Kommunikationsteilnehmer (16), insbesondere mittels eines Mobilfunknetzes (M), übertragen werden (120).

11. Vorrichtung (10) zur Durchführung des Verfahrens (100) nach einem der vorhergehenden Ansprüche, aufweisend wenigstens eine Datenverarbeitungsvorrichtung (12), welche dazu eingerichtet ist,
- eine Art eines Inhalts von zu übertragenden Dateien (D) zu ermitteln (102);
- den zu übertragenden Dateien (D) auf Basis der Art deren Inhalts wenigstens ein Attribut zuzuordnen (104, 106, 108, 110) ;
- die zu übertragenden Dateien (D) in Abhängigkeit von dem wenigstens einen Attribut zu übertragen (120).

12. System (14) zur Durchführung des Verfahrens (100) nach einem der Ansprüche 1 bis 10, aufweisend
- einen stationären Kommunikationsteilnehmer (16), welcher dazu eingerichtet ist, mittels eines Mobilfunknetzes (M) Dateien zu empfangen;
- einen mobilen Kommunikationsteilnehmer (18), welcher vorzugsweise als ein Fahrzeug, besonders bevorzugt als ein schienengebundenes Fahrzeug, ausgebildet ist, aufweisend eine Vorrichtung (10) nach Anspruch 11, welche dazu eingerichtet ist, mittels des Mobilfunknetzes (M) Dateien (D) an den stationären Kommunikationsteilnehmer (16) zu übertragen (120).

13. Computerprogramm, welches bei dessen Ausführung die Vorrichtung (10) nach Anspruch 11 dazu veranlasst, das Verfahren (100) nach einem der Ansprüche 1 bis 10 durchzuführen.

14. Computerprogramm, welches bei dessen Ausführung das System (14) nach Anspruch 12 dazu veranlasst, das Verfahren (100) nach einem der Ansprüche 1 bis 10 durchzuführen.

15. Computerlesbares Medium aufweisend Instruktionen, welche die Vorrichtung (10) nach Anspruch 11 und/oder das System (14) nach Anspruch 12 dazu veranlassen, das Verfahren (100) nach einem der Ansprüche 1 bis 10 durchzuführen.
